Europäisches Patentamt

European Patent Office

Office européen des brevets

(19)

(11) Veröffentlichungsnummer: **0 141 176**
**B1**

(12) **EUROPÄISCHE PATENTSCHRIFT**

(45) Veröffentlichungstag der Patentschrift: **28.11.90**

(21) Anmeldenummer: **84110738.6**

(22) Anmeldetag: **08.09.84**

(51) Int. Cl.⁵: **B 01 D 67/00,** B 01 D 53/22,
B 01 D 59/14, C 01 B 3/50,
C 01 B 4/00

(54) Wasserstoff-Permeationswand, Verfahren zur Herstellung derselben und deren Verwendung.

(30) Priorität: **08.09.83 DE 3332346**

(43) Veröffentlichungstag der Anmeldung:
**15.05.85 Patentblatt 85/20**

(45) Bekanntmachung des Hinweises auf die
Patenterteilung:
**28.11.90 Patentblatt 90/48**

(84) Benannte Vertragsstaaten:
**AT BE CH DE FR GB IT LI LU NL SE**

(56) Entgegenhaltungen:
DE-A-2 559 332    GB-A-1 292 025
DE-B-1 149 689    US-A-2 924 630
GB-A-1 107 811    US-A-3 238 704

JOURNAL OF THE ELECTROCHEMICAL
SOCIETY: ELECTROCHEMICAL SCIENCE AND
TECHNOLOGY, Band 128, November 1981,
Seiten 2367-2369; R. DRIVER:
"Electrodeposition of Palladium on Iron and
Steel for Electrochemical Hydrogen Permeation
Studies"

(73) Patentinhaber: **Forschungszentrum Jülich
GmbH
Postfach 1913
D-5170 Jülich (DE)**

(72) Erfinder: **Iniotakis, Nicolaos
Kopernikusstrasse 64
D-5170 Jülich (DE)**
Erfinder: **VON DER Decken, Claus Benedict, Prof.
Reumont-Strasse 34
D-5100 Aachen (DE)**
Erfinder: **Fröhling, Werner, Dr.
Keltenstrasse 38
D-5160 Düren (DE)**

**Beschreibung**

Die Erfindung bezieht sich auf ein Verfahren zur Herstellung einer Wasserstoff-Permeationswand in Form einer dünnen selektiv wasserstoffdurchlässigen Metallschicht aus einem Material mit hohem Wasserstoff-Permeationskoeffizienten, das als wasserstoffdurchlässige Schicht auf ein feinmaschiges Metallgewebe aufgebracht wird und sie umfaßt ferner eine Wasserstoff-Permeationswand und deren Verwendung.

Die hohe Permeationsfähigkeit von Wasserstoff durch geeignete Membranen wird in der Technik vielfältig angewendet. Die Membranen übernehmen dabei die Aufgabe einer Trennwand zwischen zwei Räumen, die jedoch für Wasserstoff in möglichst hohem Maße durchlässig ist.

Als erstes Beispiel ist die Entfernung von Verunreinigungen aus Wasserstoffgas zu nennen: Der zu reinigende Wasserstofstrom wird an der Primärseite einer aus Pd oder Pd-Ag bestehenden Trennwand entlanggeführt. Durch Permeation auf die Sekundärseite entsteht dort hochgereinigter Wasserstoff, während die Verunreinigungen auf der Primärseite verbleiben. Für einen hohen Wasserstoff-Permeationsstrom muß — neben anderen Betriebs- und Materialparametern — die Wandstärke der Trennwand möglichst gering sein.

Ein weiteres Beispiel ist die in der DE-OS 3 121 125 beschriebene wahlweise selektive oder nichtselektive Abtrennung bestimmter Wasserstoffisotope, z.B. Tritium, aus einem Wasserstoffisotopengemisch: Die Wasserstoffisotope permeieren durch eine Trennwand, treten mit einer sekundärseitig zugeführten Substanz in Wechselwirkung und werden mit dieser abgeführt. Durch die Wahl der Substanz kann bewirkt werden, daß entweder alle Wasserstoffisotope abgeführt werden oder aber bevorzugt nur ein bestimmtes Isotop, z.B. Tritium.

Die Trennwände, die bei den vorstehend beschriebenen und ähnlichen Verfahren angewandt werden, müssen eine hohe Durchlässigkeit für Wasserstoff haben. Als Materialien kommen metallische Werkstoffe wie Nb, Ta, V, Pd und Zr, aber auch bestimmte Gläser und Kunststoffe in Betracht. Die jeweils herrschenden Umgebungsbedingungen können jedoch zu wesentlichen Einschränkungen führen. Bei den metallischen Werkstoffen zählen hierzu die Versprödung durch die Bildung von Hydriden und die starke Verminderung des Wasserstoff-Permeationskoeffizienten durch die Bildung von hemmenden Deckschichten auf der Trennwandoberfläche, z.B. in Form von Metalloxiden. Aus diesem Grunde werden vornehmlich Palladium und seine Legierungen angewandt, die weitgehend resistent sowohl gegen eine Hydridbildung als auch gegen Oberflächenoxidation sind. Nachteilig bei Palladium ist jedoch vor allem sein hoher Preis sowie seine beschränkte Verfügbarkeit. Aus diesem Grunde werden möglichst dünne Membranen angestrebt. Wegen der erforderlichen mechanischen Stabilität liegt die untere Grenze der erreichbaren Wandstärken bei dünnwandigen Rohren bei etwa 70 µm, selbst wenn im Innern Verstärkungselemente, wie z. B. Spiralfedern vorgesehen werden (DE-PS 1 467 079).

Gemäß der US-PS 3 238 704 wird daher dünne wasserstoffdurchlässige Folie (von ca. 13 bis 76 µm Dicke) zusammen mit feinem Metallgewebe (Maschenweiten 0,5 - 1 mm) als Träger verwendet, das auf seiner der Folie zugewandten Seite gegebenenfalls durch Walzen abgeflacht sein kann. Vorzugsweise werden Schichtungen aus mehreren Geweben als Träger verwendet. Auch hier muß die Folie selbst tragfähig und handhabbar sein, so daß gewisse Mindestdicken nicht zu unterschreiten sind. Ferner sind Folie und Träger gegeneinander beweglich, wodurch sich Beeinträchtigungen im Gebrauch ergeben können.

Eine Wasserstoff-Permeationswand, bei der Membran und Träger mechanisch untrennbar miteinander verbunden sind, ist aus der GB-PS 1 107 811 bekannt, bei der ein mit einer Vielzahl von diskreten Löchern versehener Träger mit einer die Löcher abdeckenden Membran vereinigt ist. Dazu werden entweder Träger und Membran durch Walzen oder ähnliches miteinander verbunden oder ein zusammenhängender Träger wird insbesondere galvanisch mit einer wasserstoffdurchlässigen Metallschicht versehen und anschließend insbesondere durch Ätzen mit den notwendigen Löchern versehen. Der Permeationsgrad solcher Anordnung ist jedoch nicht besonders groß und die mechanische Stabilität der Anordnung relativ gering.

Die galvanische Erzeugung wasserstoffdurchlässiger Schicht wird auch z. B. von Driver im J. Electrochem. Soc. 128 (1981) S. 2367-69 beschrieben.

Um die Wandstärke für das Pd weiter zu verringern, sind auch poröse Träger z.B. aus Sintermaterial vorgeschlagen worden, bei denen eine dünne Pd-Schicht von bis zu ca. 12 µm Stärke, z.B. durch Aufdampfung, aufgebracht wird (US-PSen 2 824 620 und 3 241 298). Nachteilig bei porösen Trägern, die aus Kornmaterial, wie z.B. aus Metallpartikeln, hergestellt werden, ist jedoch ihre für die gewünschte Festigkeit erforderliche Wandstärke von ca. 500 µm bis 1000 µm. Diese führt zu einer wesentlichen Verminderung der effektiven Permeationsgeschwindigkeit durch die gesamte Trennwand:

Währen die effektive Permeationsgeschwindigkeit des Wasserstoffs durch ein freitragendes Pd-Rohr nur durch den Permeationsschritt durch das Metall bestimmt wird, ist bei der Kombination eines porösen Trägers von 500 µm Dicke und einer Pd-Schicht von 5 µm Dicke für die effektive Permeationsgeschwindigkeit im wesentlichen die Diffusionsgeschwindigkeit im porösen Träger maßgebend.

Da hierdurch die zur Erzielung eines bestimmten Permeationsstromes erforderliche Permeationsfläche und damit der Bedarf an Pd bestimmt wird, kann der Vorteil der geringen Stärke der Pd-Schicht also nur sehr schlecht genutzt werden.

Aufgabe der Erfindung ist daher die Schaffung einer Wasserstoff-Permeationswand, die bei ausreichender Stabilität eine möglichst hohe Durchlässigkeit für Wasserstoff besitzt.

Diese Aufgabe wird durch ein Verfahren zur Herstellung einer Wasserstoff-Permeationswand der eingangs genannten Art gelöst, das dadurch gekennzeichnet ist, daß man die wasserstoffdurchlässige Metallschicht auf dem Metallgewebe durch galvanische Abscheidung mit ein- oder beidseitiger Gegenelektrode, ggf. mit aus kolloidaler Lösung erfolgender Vorbeschichtung mit einem elektrisch leitenden Material und ggf. abschließende Temperung der Abscheidungen zur Legierungsbildung erzeugt.

Bei einer solchen Wasserstoff-Permeationswand wird die mechanische Festigkeit nicht allein durch diejenige des feinmaschigen Metallgewebes bestimmt, das einerseits gut gasdurchlässig ist, dessen Maschen aber andererseits so fein sind, daß ein ''Durchsacken'' auch sehr dünner Metallschichten verhindert wird: Die galvanische Abscheidung der wasserstoffdurchlässigen Metallschicht führt zu einer Versteifung des Gewebes, und sie bietet zudem die Möglichkeit der Bildung unterschiedlicher Ausführungsarten:

So kann durch direkten Schichtauftrag auf das Metallgewebe ein ''Zuwachsen'' der Öffnungen bzw. Maschen erreicht werden, bei dem relativ dünne zentrale Bereiche sehr geringer Schichtdicke verbleiben, die den Wasserstoffdurchtritt erleichtern.

Die insbesondere aus Palladium oder Palladium/Silber oder einer anderen Palladiumlegierung hoher Wasserstoffdurchlässigkeit gebildete dünne Metallschicht hat insbesondere eine zumindest etwa der halben Maschenweite entsprechende Dicke und wird — je nach Maschenweite des gewählten Metallgewebes in der Gegend von 1 bis 20 μm, insb. 2 bis 10 μm liegen. Selbstverständlich ist der Aufbau größerer Schichtdicken unzweckmäßig, so daß im Einklang mit den Maschenweiten von kommerziell verfügbarem Metalltuch Abscheidungen von bis zu etwa 15 μm vorgesehen werden sollten. Durch ein- oder beidseitige Anordnung einer Gegenelektrode kann die Metallabscheidung vornehmlich nur von einer Seite oder von beiden Seiten erfolgen.

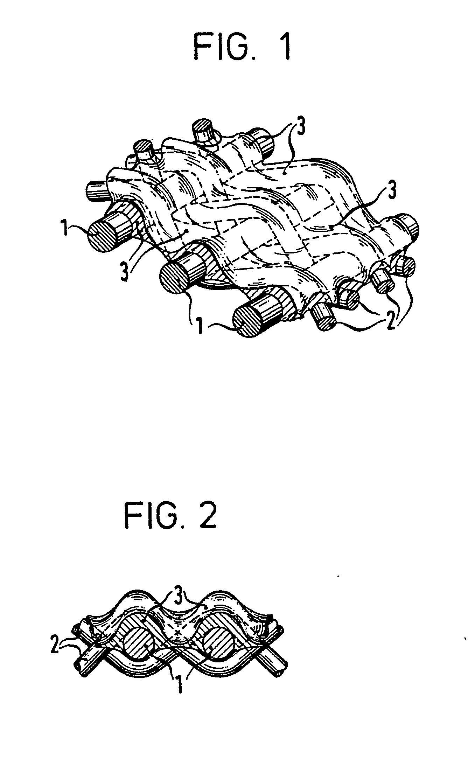

Die Art einer solchen Abscheidung ist schematisch in Figur 1 dargestellt: Die Kettfäden 1 des Metallgewebes haben eine Dicke von z.B. 50 - 80 μm, die Schußfäden 2 von 20 - 50 μm. Die galvanisch abgeschiedene Metallschicht ist schematisch durch die Linien 3 angedeutet. Figur 2 zeigt die Metallverteilung der Schicht bei Abscheidung von einer Seite her (im Schnitt).

Bei der galvanischen Abscheidung können nicht nur Schichten aus einem, sondern auch aus mehreren Metallen, insb. Legierungsschichten erzeugt werden, indem zwei oder auch mehrere Metalle gleichzeitig in Form einer Legierung oder auch nacheinander in aufeinanderfolgenden Schichten abgeschieden werden, die gegebenenfalls durch eine abschließende Temperung in die gewünschte Legierung umgewandelt werden.

Während durch unmittelbare galvanische Beschichtung von Metallgewebe Schichten durch ein Zuwachsen der Öffnungen oder Maschen gebildet werden unter Ausbildung von gegebenenfalls vergröberten Oberflächen, wobei die minimal mögliche Schichtdicke der selektiv wasserstoffdurchlässigen Metallschicht von der Maschenweite abhängt, die durch die Abscheidung überspannt werden muß, kann nach einer Abwandlung des Verfahrens durch vorangehende Ausfüllung der Gitterlücken mit einem gegebenenfalls entfernbaren elektrisch leitenden Material, wie z.B. Leitsilber, das aus kolloidaler Lösung aufgetragen wird, dafür gesorgt werden, daß die galvanische Abscheidung über die Fläche hinweg praktisch gleichmäßig erfolgt.

Ein solcher, die Maschen überspannender Auftrag aus kolloidaler Lösung kann insbesondere mit einem Metall erfolgen, das eine gewünschte Legierungskomponente der zu bildenden Permeationsschicht ist, wie z.B. Silber zur Ausbildung einer Palladium-Silber-Schicht. Auch in diesem Falle wird durch abschließende Temperung für die Ausbildung der Legierung gesorgt.

Man kann aber auch die aus kolloidaler Lösung gebildete Vorbeschichtung nach der galvanischen Ausbildung der gewünschten Permeationsschicht wieder entfernen.

Die galvanische Erzeugung der selektiv wasserstoffdurchlässigen Schicht kann neben der mechanischen Versteifung der Wand und relativ dünnen Ausbildung der Permeationsschicht auch dazu dienen, ein an sich unedleres Metallgewebe zu veredeln und gegen Korrosion zu schützen. Gleichzeitig kann durch eine Oberflächenvergrößerung, auch des Metallgewebes, für eine Einflußnahme auf weitere Komponenten des wasserstoffhaltigen Gases, etwa durch Adsorption oder Absorption, erreicht werden.

Die durch galvanische Abscheidung gebildete, relativ dünne Permeationsschicht sollte vorzugsweise durch Aufbringen eines weiteren Metallgewebes auf ihrer Oberfläche vor der Einwirkung von Verunreinigungen und mechanischen Beanspruchungen geschützt werden. Durch eine solche weitere Abdeckung der galvanischen Schicht, die damit praktisch zwischen zwei Metallgeweben liegt, wird ferner eine Verbesserung der Verarbeitung erreicht, da beispielsweise Schweißnähte an Überlappungen (die nunmehr durch vier Metallgewebe sowie zwei Galvanoschichten gebildet werden) möglich werden, die anderenfalls wegen der zu geringen Schichtdicke nicht gut zu erreichen waren.

Eine erhöhte räumliche Konzentration der Permeationsfläche kann durch eine Wellung erreicht werden, so daß pro Volumeneinheit mehr Wandoberfläche für den Wasserstoffdurchtritt vorhanden ist. Weiterhin wird durch die Wellung eine Steigerung der mechanischen Stabilität der Permeationswand erreicht. Gegebenenfalls kann ein zusätzliches grobes Tragwerk vorgesehen werden, das auch als Verdrängerkörper ausgebildet sein kann.

Bei Verwendung der vorliegenden Permeations-

wand als selektives Tritiumfilter beim Verfahren gemäß der DE-OS 3 121 125, wonach beispielsweise Tritium aus einem mit Helium arbeitenden Reaktorkühlkreislauf durch Permeation durch eine wasserstoffdurchlässige Wand und Reaktion hinter der Wand mit einem wasserstoffaufnehmenden Material entfernt wird, ergeben sich durch die Erfindung einige weitere Vorteile:

Die wasserstoffdurchlässige Schicht wird durch die Metallgewebe beidseitig auch vor passivierenden Spaltprodukten — z.B. Jod — geschützt, welche im Primärgas enthalten sind, da die Oberfläche des Metallgewebes als Adsorber wirken kann.

**Patentansprüche**

1. Verfahren zur Herstellung einer Wasserstoff-Permeationswand in Form einer dünnen selektiv wasserstoffdurchlässigen Metallschicht aus einem Material mit hohem Wasserstoff-Permeationskoeffizienten, das als wasserstoffdurchlässige Schicht auf ein feinmaschiges Metallgewebe aufgebracht wird, dadurch gekennzeichnet, daß man die wasserstoffdurchlässige Metallschicht auf dem Metallgewebe durch galvanische Abscheidung mit ein- oder beidseitiger Gegenelektrode, ggf. mit aus kolloidaler Lösung erfolgender Vorbeschichtung mit einem elektrisch leitenden Material und ggf. abschließende Temperung der Abscheidungen zur Legierungsbildung erzeugt.

2. Verfahren nach Anspruch 1, dadurch gekennzeichnet, daß man zwei oder mehrere Metalle gleichzeitig oder nacheinander abscheidet, die einzeln oder als Legierung wasserstoffdurchlässig sind.

3. Verfahren nach Anspruch 1 oder 2, dadurch gekennzeichnet, daß man das Metallgewebe vor der galvanischen Abscheidung mit einer wieder zu entfernenden aus kolloidaler Lösung erfolgenden Vorbeschichtung versieht, die anschließend wieder entfernt wird.

4. Verfahren nach einem der vorangehenden Ansprüche, dadurch gekennzeichnet, daß man die wasserstoffdurchlässige Schicht galvanisch in einer zumindest etwa der halben Maschenweite des Metallgewebes entsprechenden Dicke abscheidet.

5. Verfahren nach einem der vorangehenden Ansprüche, dadurch gekennzeichnet, daß auf die galvanische Schicht ein weiteres Metallgewebe aufgebracht wird.

6. Wasserstoffpermeationswand in Form eines Metallgewebes mit darauf abgeschiedener und ggf. getemperter wasserstoffdurchlässiger Metallschicht, erhalten nach einem der Ansprüche 1 bis 4.

7. Wasserstoffpermeationswand nach Anspruch 6, gekennzeichnet durch ein weiteres Metallgewebe über der selektiv wasserstoffdurchlässigen Metallschicht.

8. Permeationswand nach Anspruch 6 oder 7, gekennzeichnet durch eine Wellung und/oder ein zusätzliches ggf. als Verdrängerkörper wirkendes Tragwerk.

9. Verwendung von Permeationswänden nach einem der Ansprüche 6 bis 8 zur Tritiumausfilterung aus Reaktoren.

**Revendications**

1. Procédé de fabrication d'une paroi perméable à l'hydrogène, sous la forme d'une mince couche métallique perméable sélectivement à l'hydrogène et en un matériau ayant un grand coefficient de perméation à l'hydrogène, qui est déposé sous la forme d'une couche perméable à l'hydrogène sur une toile métallique à mailles fines, caractérisé, en ce qu'il consiste à produire la couche métallique perméable à l'hydrogène sur la toile métallique par dépôt par électrolyse avec une contre-électrode, d'un côté ou des deux côtés, le cas échéant avec une opération effectuée en solution colloïdale de prérevêtement par un matériau conducteur de l'électricité et, le cas échéant, par un recuit final des dépôts pour former l'alliage.

2. Procédé suivant la revendication 1, caractérisé, en ce qu'il consiste à déposer simultanément ou l'un après l'autre deux ou plusieurs métaux qui sont perméables à l'hydrogène, isolément ou sous la forme d'un alliage.

3. Procédé suivant la revendication 1 ou 2, caractérisé, en ce qu'il consiste à munir la toile métallique, avant le dépôt par électrolyse, d'un prérevêtement à éliminer ensuite et s'effectuant en solution colloïdale, que l'on oélimine ensuite à nouveau.

4. Procédé suivant l'une des revendications précédentes, caractérisé, en ce qu'il consiste à déposer la couche perméable à l'hydrogène par électrolyse en une épaisseur correspondant au moins à environ la moitié de la largeur des mailles de la toile métallique.

5. Procédé suivant l'une des revendications précédentes, caractérisé, en ce qu'il consiste à déposer à une autre toile métallique sur la couche obtenue par électrolyse.

6. Paroi perméable à l'hydrogène, sous la forme d'une toile métallique, sur laquelle est déposée et, le cas échéant, recuite, une couche métallique perméable à l'hydrogène obtenue suivant l'une des revendications 1 à 4.

7. Paroi perméable à l'hydrogène suivant la revendication 6, caractérisée, par une autre toile métallique, au-dessus de la couche métallique perméable sélectivement à l'hydrogène.

8. Paroi métallique suivant la revendication 6 ou 7, caractérisée, par une ondulation et/ou un support servant en plus, le cas échéant, de corps de déplacement.

9. Utilisation de paroi perméable, suivant l'une des revendications 6 à 8 pour filtrer du tritium de réacteurs.

**·Claims**

1. Method for producing a hydrogen permeation wall in the form of a thin, selectively hydrogen-permeable metallic layer of a material with a high hydrogen permeation coefficient, which is applied as a hydrogen-permeable layer onto a fine-meshed metallic fabric, characterised by producing the hydrogen-permeable metallic layer on the metallic fabric by electro-deposition with a single-sided or double-sided counterelectrode, if appropriate including precoating with an electrically conductive material from a colloidal solution and, if appropriate, finally ageing the deposits for alloy formation.

2. Method according to claim 1, characterised by simultaneously or consecutively depositing two or more metals that are hydrogen-permeable individually or as an alloy.

3. Method according to claim 1 or 2, characterised by temporarily precoating the metallic fabric from a colloidal solution prior to electro-deposition, said precoating subsequently being removed again.

4. Method according to one of the preceding claims, characterised by electro-deposition of the hydrogen-permeable layer in a thickness corresponding to at least approximately half the mesh size of the metallic fabric.

5. Method according to one of the preceding claims, characterised by applying a further metallic fabric onto the electro-deposited layer.

6. Hydrogen permeation wall in the form of a metallic fabric with a hydrogen-permeable metallic layer deposited thereon and aged if appropriate, obtained in accordance with one of claims 1 to 4.

7. Hydrogen permeation wall according to claim 6, characterised by a further metallic fabric over the selectively hydrogen-permeable metallic layer.

8. Permeation wall according to claim 6 or 7, characterised by having corrugations and/or an additional framework which acts as a displacement body if appropriate.

9. Use of permeation walls according to one of claims 6 to 8 for the elimination of tritium from reactors.

EP 0 141 176 B1

# FIG. 1

# FIG. 2